# EUROPÄISCHE PATENTSCHRIFT

(11) **EP 0 855 946 B1**
(45) Veröffentlichungstag und Bekanntmachung des Hinweises auf die Patenterteilung: **12.05.1999**
(21) Anmeldenummer: 96934539.6
(22) Anmeldetag: 04.10.1996
(51) Int. Cl.: B23Q 1/00, B05B 7/04, B23Q 11/10

(54) **VERFAHREN ZUR KÜHLUNG UND SCHMIERUNG EINES WERKZEUGES UND/ODER WERKSTÜCKES UND BEARBEITUNGSSPINDEL ZUR DURCHFÜHRUNG DES VERFAHRENS**
METHOD OF COOLING AND LUBRICATING A TOOL AND/OR WORKPIECE AND A WORKING SPINDLE FOR CARRYING OUT THE METHOD
PROCEDE DE REFROIDISSEMENT ET DE LUBRIFICATION D'UN OUTIL ET/OU D'UNE PIECE, ET BROCHE ADAPTEE POUR LA MISE EN OEUVRE DE CE PROCEDE

(30) Priorität: 18.10.1995 DE 19538762
(43) Veröffentlichungstag der Anmeldung: 05.08.1998
(73) Patentinhaber: Hüller Hille GmbH, 71636 Ludwigsburg (DE)
(72) Erfinder: BUCHHOLZ, Reinhard, D-71732 Tamm (DE); SPÄTH, Günther, D-70806 Kornwestheim (DE); HORN, Wolfgang, D-74385 Pleidelsheim (DE)
(74) Vertreter: Dahlkamp, Heinrich-Leo
(86) Internationale Anmeldenummer: EP9604323
(87) Internationale Veröffentlichungsnummer: WO9714530

(56) Entgegenhaltungen:
- DE-A- 3 345 721
- DE-A- 4 200 808
- DE-C- 3 817 799
- US-A- 4 343 378

## Beschreibung

Die Erfindung bezieht sich auf ein Verfahren zur Kühlung und Schmierung eines spanend arbeitenden, rotierenden Werkzeuges mit geometrisch definierter Schneide und gegebenenfalls des Werkstückes im Bearbeitungsbereich gemäß Oberbegriff des Anspruches 1 sowie eine Bearbeitungsspindel zur Durchführung des Verfahrens gemäß Oberbegriff des Anspruches 10, wie aus DE 42 00 808 A1 bekannt.

Kühlschmierungen im Eingriffsbereich von Werkzeugen gehören zum Stand der Technik. Die vorbekannten Verfahren benötigen erhebliche Flüssigkeitsmengen von z. B. 10 bis 1.000 l/min je Werkzeug. Dabei wird das Kühlschmiermittel der Schneiden-Eingriffsstelle von außen unter Druck von z. B. 5 bar zugeführt.

Zum Stand der Technik zählen auch Verfahren, bei denen die Kühlschmierung des Werkzeuges von außen mit geringen Flüssigkeitsmengen unter Nutzung von Druckluft-Sprühgeräten erfolgt.

Vorbekannt sind weiterhin Verfahren, bei denen die Zuführung an die Schneiden-Eingriffsstelle durch die Arbeitsspindel und das Werkzeug selbst erfolgt. Hier sind z. B. Drücke bis 100 bar üblich.

Aus der DE 42 00 808 A1 ist eine Bearbeitungseinheit mit einer angetriebenen, rotierenden Spindel bekannt, wobei an der Spindel eine Spindel und das Bohr- oder Fräswerk mit je einer zentralen Bohrung und das Bohr- oder Fräswerkzeug mit einer Austrittsöffnung zur Zuführung von Schmier- und Kühlmittel zum Bearbeitungsbereich versehen sind. Die Bohrungen werden dabei mit Druckluft versorgt, während das Schmiermittel durch ein gesondertes und durch die Bohrungen bis in das Innere des Werkzeugendes geführtes dünnes Rohr zugeführt wird. Die Einrichtungen zur Veränderung und Absperrung der Schmier- und Kühlmittelzufuhr sind dabei außerhalb der Bearbeitungseinheit angeordnet. Dadurch ist nur eine träge und zeitlich verzögerte Veränderung der Schmier- und Kühlmittelzufuhr im Bearbeitungsbereich möglich.

Das Problem derartiger Dosiersysteme für die Trockenbearbeitung besteht darin, daß die Kühlschmiermittelzufuhr zum Bearbeitungsbereich für den Werkzeugwechsel nicht schnell genug und nicht ohne Nachlauf unterbrochen werden kann und daß nach einem Werkzeugwechsel eine ausreichend große Menge Kühlschmiermittel erst mit einer erheblichen Verzögerung im Bearbeitungsbereich zur Verfügung steht. Bei hohen Spindeldrehzahlen besteht außerdem das Problem, daß durch die Zentrifugalkraft das flüssige Medium aus dem Luftstrom ausgeschleudert wird und sich an den Wänden der Hohlwelle niederschlägt. Vor allem dieser Niederschlag an den Rohrwänden führt nach dem Werkzeugwechsel zu einer erheblichen Verzögerung der Flüssigkeitszufuhr zum Bearbeitungsbereich, da es einige Zeit dauert, bis die Flüssigkeit an den Rohrwänden entlang bis zum Werkzeug 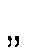 gekrochen" ist. Bei Querschnittserweiterungen müssen darüber hinaus die erweiterten Hohlräume mit Kühlschmiermittel gefüllt werden, bevor dieses zum Werkzeug gelangt. Die Dosierung des Kühl-Schmiermittel-Luft-Gemisches am Werkzeug ist damit bei den bekannten Einrichtungen und Verfahren sehr ungenau und träge.

In der DE 38 17 799 C1 ist weiterhin eine Drehdurchführung für Fluide, insbesondere für Werkzeugmaschinenspindeln beschrieben, wobei am Übergang von einem feststehenden Gehäuse zu einer drehbar gelagerten Hohlwelle federbelastete Sperrventile angeordnet sind, mit denen die Durchflußkanäle für Luft und Flüssigkeit absperrbar sind. Luft und Kühlschmiermittel werden dabei hinter den Sperrventilen in einer Hohlwelle vermischt und über einen Zuführungskanal dem Bearbeitungsbereich zugeführt. Für die sogenannte Trockenbearbeitung ist außerdem vorgesehen, daß beim Werkzeugwechsel stets nur Luft durch die Hohlwelle und den Zuführungskanal in die Werkzeugaufnahme geblasen wird.

Der Erfindung liegt nunmehr die Aufgabe zugrunde, ein gattungsgemäßes Verfahren und eine Bearbeitungsspindel vorzuschlagen, bei dem die vorgenannten Probleme nicht bestehen und insbesondere bei schnell laufenden Bearbeitungsspindeln auch unmittelbar nach dem automatischen Einwechseln des Werkzeuges in die Bearbeitungsspindel an der Bearbeitungsstelle eine richtige Dosierung des Kühlschmiermittel-Luft-Gemisches möglich ist und eine schnelle und intensive Durchmischung mit Kühlschmiermittel erreicht und eine Entmischung verhindert wird.

Die Lösung dieser Aufgabe ist im Kennzeichen der Patentansprüche 1 und 10 wiedergegeben.

Die Unteransprüche 2 bis 9 und 11 bis 15 enthalten ergänzende Verfahrens- bzw. Vorrichtungsvorschläge.

Bei dem erfindungsgemäßen Verfahren wird das Kühlschmiermittel und das Trägergas, vorzugsweise innerhalb der sich drehenden Bearbeitungsspindel über geeignete Dosierelemente jeweils in einen ganz oder teilweise mit porösem Füllmaterial, insbesondere aus porösem Sintermaterial, gefüllten Kühlschmiermittelspeicherraum gegeben, dort werden beide miteinander vermischt und danach das Kühlschmiermittel-Trägergas-Gemisch unmittelbar dem Bearbeitungsbereich zugeführt. Erfindungsgemäß kann auch bei abgeschalteter Kühlschmiermittelzufuhr das Trägergas für begrenzte Zeit mit im Füllmaterial gespeichertem Kühlschmiermittel benetzt werden. Nach Einleitung des Kühlschmiermittels in den Speicherraum über eine zentrale hintere Zuführungsöffnung wird dieses im gesamten Speicherraum verteilt. Auch bei schnell drehenden Bearbeitungsspindeln verhindert dabei das poröse Sintermetall, daß sich dieses Kühlschmiermittel nur an den Außenwänden des Speicherraumes absetzt, der Speicherraum bleibt also nahezu vollständig mit Kühlschmiermittel gefüllt. Bei geeigneter Zugabe des Trägergases zum Speicherraum wird dieses mit Kühlschmiermittel angereichert und vermischt und dann unmittelbar dem Bearbeitungsbereich zugeführt. Durch die getrennt steuerbare Zufuhr von Kühlschmiermittel und Trägergas über unmittelbar vor dem Speicherraum angeordnete Dosierelemente kann das Kühlschmiermittel dem Trägergasstrom, insbesondere dem Luftstrom, so zugeführt werden, daß z. B. nach einem Werkzeugwechsel, bereits im ersten Luftimpuls zur Schmierung der Schnittstelle eine ausreichend große Menge Kühlschmiermittel zur Verfügung steht. Durch das im Speicherraum vorhandene poröse Sintermetall ist es erfindungsgemäß möglich, daß nach Abschalten der Zufuhr von Kühlschmiermittel und Trägergas der Speicherraum zumindest teilweise mit Kühlschmiermittel gefüllt bleibt und nicht, wie bei Vorrichtungen nach dem Stand der Technik, das Kühlschmiermittel aus dem Zuführungsrohr in den Bearbeitungsbereich abfließt bzw. nachtropft. Das Kühlschmiermittel bleibt auch bei abgeschalteter Luftzufuhr zumindest so gleichmäßig im Speicherraum verteilt, daß beim Wiedereinschalten des Luftstromes im Speicherraum sofort die Anreicherung mit Kühlschmiermittel einsetzt und dem Bearbeitungsbereich ohne oder ohne wesentliche Verzögerung das erforderliche Kühlschmiermittel-Trägergas-Gemisch zugeführt wird. Das Speichervolumen wird erfindungsgemäß so bemessen, daß nach Abschalten und/oder vor Einschalten der Kühlschmiermittelzufuhr für einen Zeitraum von bis zu 30 sec, vorzugsweise bis zu 15 sec, eine ausreichende Anreicherung des Trägergases mit Kühlschmiermittel erreicht wird. Insbesondere bei gleichmäßig getakteter Kühlschmiermittelzufuhr zum Speicherraum kann hierdurch während der Bearbeitung verhindert werden, daß der Speicherraum von Kühlschmiermittel leer geblasen wird und die Bearbeitung während dieser Zeit ohne Kühlung und trocken erfolgt.

Es hat sich erfindungsgemäß als günstig erwiesen, Kühlschmiermittel und Trägergas auf unterschiedlich langem Weg durch das Füllmaterial im Speicherraum zu führen, insbesondere wenn der Weg der Blasluft im Vergleich zum Kühlschmiermittel durch das poröse Sintermaterial sehr kurz ist, ist damit vorteilhafter Weise nur ein geringer Druckverlust verbunden. Der Weg der Blasluft durch den Speicherraum ist dabei so bemessen, daß immer eine ausreichende Anreicherung mit Kühlschmiermittel erreicht wird.

Durch die erfindungsgemäße Anordnung von Dosierelementen in der Bearbeitungsspindel unmittelbar vor Einleitung der Medien in den Speicherraum kann erfindungsgemäß auch bei abgeschalteter Kühlschmiermittelzufuhr zum Speicherraum das Kühlschmiermittel zur Kühlung und Schmierung der Lager und Dichtungen der Mediendurchführung ganz oder teilweise im Kreislauf geführt werden und gegebenenfalls auch die Einstellung des Kühlstromes nahezu unabhängig von der Zumessung des Kühlschmiermittels zur Bearbeitung erfolgen. Das ist deshalb wichtig, da der für die Zerspanung erforderliche Kühlschmiermittelstrom sehr viel kleiner ist als der für die Kühlung erforderliche Kühlschmiermittelstrom. Abhängig von der Bearbeitungsaufgabe werden verschiedene Drücke und Mischungsverhältnisse von Kühlschmierstoff und Trägergas erforderlich. Durch die erfindungsgemäße getrennte Steuerung von Kühlschmiermittel und Trägergas wird die exakte Einstellung von Druck und Mischungsverhältnis möglich.

Es hat sich als günstig erwiesen, wenn das Kühlschmiermittel aus einem Dosierelement diskontinuierlich und/oder getaktet direkt dem Speicherraum zugeführt wird. Damit ist auch bei sogenannter Minimalschmierung oder Trockenbearbeitung die Zufuhr eines sehr kleinen Kühlschmiermittelstromes möglich. Durch den Speicher wird trotz der diskontinuierlichen Dosierung des Kühlschmiermittels eine kontinuierliche Vermischung mit der Luft ermöglicht. Dosiergeräte, die eine für die Trockenbearbeitung benötigte, sehr kleine Kühlschmiermittelmenge kontinuierlich fördern können, sind normalerweise in einer Spindel nicht unterzubringen.

Zur Durchführung des beschriebenen Verfahrens wird erfindungsgemäß eine Bearbeitungsspindel nach dem Oberbegriff des Anspruches 10 vorgeschlagen, bei der unmittelbar vor dem Werkzeug ein ganz oder teilweise mit porösem Füllmaterial, insbesondere Sintermetall, gefüllter Speicherraum angeordnet ist. Dieser Speicherraum besteht aus einem im wesentlichen zylindrischen geschlossenen Mantel, der sich zum Bearbeitungsbereich hin auch stufenweise im Durchmesser verkleinern kann. In diesem äußeren Mantel befindet sich am hinteren Ende eine zentrale, koaxiale Zuführungsöffnung für das Kühlschmiermittel und an dem gegenüberliegenden Ende eine Austrittsöffnung für das erzeugte Kühlschmiermittel-Trägergas-Gemisch. Zur Zuführung des Trägergases sind in der Nähe der Zuführungsöffnung für das Kühlschmiermittel im Mantel des Speicherraumes im wesentlichen radial angeordnete Öffnungen vorhanden. Durch diese Ausbildung der Bearbeitungsspindel kann eine schnelle und intensive Durchmischung der Medien bzw. Anreicherung des Trägergases mit Kühlschmiermittel erreicht werden. Der Raum zwischen Speicher und Werkzeug wird so klein wie möglich gehalten, damit das Gemisch auf kurzem Wege zum Bearbeitungsbereich gelangt, ohne daß es zu einer eventuellen Entmischung kommt.

Eine vorteilhafte Ausführungsform der Erfindung sieht vor, daß im Speicherraum bzw. dem porösen Sintermaterial im Inneren mittig ein Kanal angeordnet ist, der sich von der Austrittsöffnung des Gemisches bis kurz vor die Zuführungsöffnung des Kühlschmiermittels erstreckt. Durch diesen Kanal wird erreicht, daß die Luft einen kürzeren Weg durch das Füllmaterial nehmen kann und anschließend durch diesen Kanal bis zur Austrittsöffnung strömen kann. Auf diesem Wege durch den mittigen Kanal kann die Luft, soweit erforderlich, Kühlschmiermittel aus dem umgebenden, mit Filtermaterial gefüllten Speicherraum aufnehmen. Die Austrittsöffnung für das Gemisch aus dem Speicherraum hat erfindungsgemäß einen gegenüber dem Durchmesser des Außenmantel des Speicherraumes kleineren Durchmesser. Dieser kleinere Durchmesser entspricht zweckmäßigerweise in etwa dem Durchmesser des mittigen Kanales. Durch diese Verringerung des Durchmessers an der Austrittsseite kann auf einfache Weise in dem Ringraum zwischen dem mittigen Kanal und dem äußeren Mantel ein Speicherraum für das Kühlschmiermittel entstehen. In diesem äußeren Speicherraum wird insbesondere bei schnell drehenden Spindeln das Kühlschmiermittel durch die Zentrifugalkraft gehalten und nach außen gedrückt. Aus diesem äußeren Speicherraum wird das Kühlschmiermittel bei Erhöhen des Luftdruckes bzw. -stromes in den mittigen Kanal und damit zum Bearbeitungsbereich gefördert.

Speicher und das Dosierelement für die Kühlschmiermittelzufuhr können erfindungsgemäß eine Baueinheit bilden und in einem als Hohlwelle ausgebildeten Spannbolzen angeordnet sein. Dabei sind zweckmäßigerweise zwischen Spannbolzen und Dosierelement Längskanäle zur Zuführung des Trägergases angeordnet. Der Spannbolzen ist vorne in die Spindel eingebaut und greift in den Werkzeughalter ein. Dies ermöglicht, daß der zylindrische Mantel, in den das Füllmaterial eingebaut ist, direkt bis in die Bohrung des Werkzeughalters hineinreicht. Der erfindungsgemäße Spannbolzen mit darin angeordneten Speicher und Dosierelement ist mit einer einfachen Schraubverbindung mit der Spindel verbunden und kann als Ganzes gegen einen anderen Spannbolzen ausgetauscht werden, der z. B. auch statt des Speicherraumes nur ein zentrales Zuführungsrohr für die Vollschmierung besitzt. Durch dieses Zuführungsrohr kann das Kühlschmiermittel vom entsprechend ausgebildeten Dosierelement aus ohne irgendwelche Querschnittserweiterungen, in denen sich Kühlschmiermittel niederschlagen könnte, dem Bearbeitungsbereich zugeführt werden. Durch die Austauschbarkeit des Spannbolzens können also mit ein und derselben Bearbeitungsspindel Werkzeuge sowohl mit Vollschmierung als auch mit Minimalmengenkühlschmierung (Trockenbearbeitung) geschmiert und gekühlt werden. Bearbeitungsspindeln mit Spannbolzen zur Vollschmierung stellen als solche keine Ausführungen der Erfindung dar.

Die Erfindung wird anhand der beigefügten Figuren 1 bis 5 beispielsweise näher erläutert.

Es zeigen
- Figur 1: eine Bearbeitungspindel mit Einrichtung zum automatischen Werkzeugwechsel,
- Figur 2: eine Teilansicht in Richtung des Pfeiles A der Figur 1,
- Figur 3: eine Anordnung eines Spannbolzens für **Trockenbearbeitung** in der Bearbeitungsspindel
- Figur 4: eine nicht zur Erfindung gehörende Anordnung eines Spannbolzens für **Naßbearbeitung** in der Bearbeitungsspindel,
- Figur 5: einen Spannbolzen für Trockenbearbeitung im Schnitt.

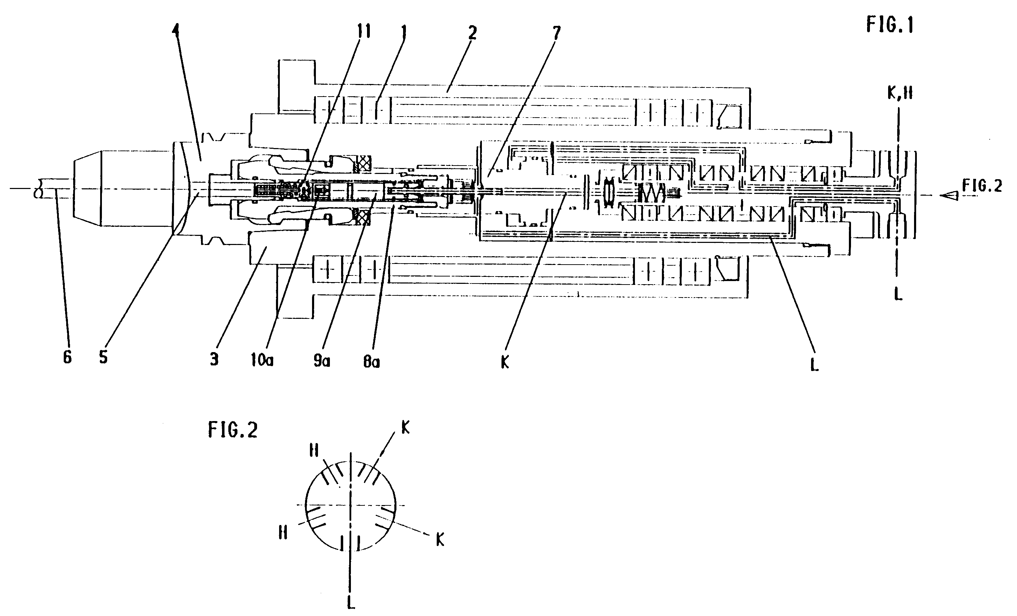

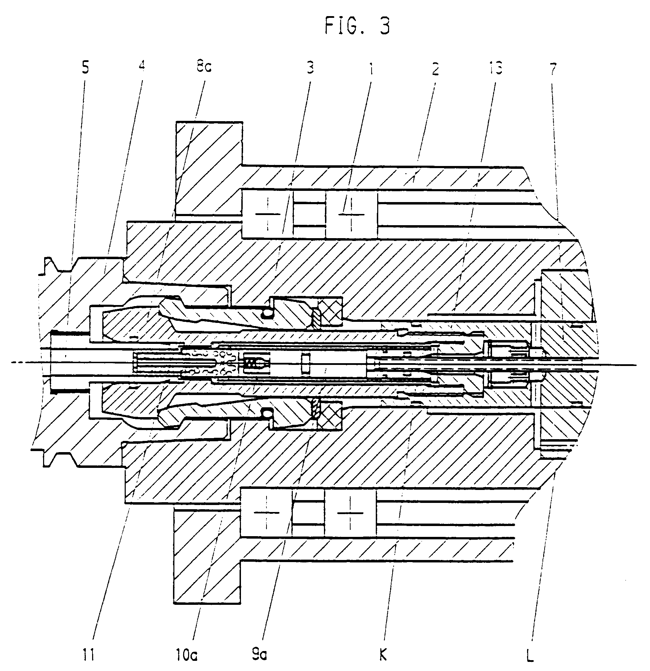

In Figur 1 ist eine erfindungsgemäße Bearbeitungsspindel insgesamt dargestellt. Im folgenden wird nur auf die wesentlichen Konstruktionselemente eingegangen. Die schnell drehende, motorisch angetriebene Bearbeitungsspindel 3 ist über Spindellager 1 im Spindelgehäuse 2 gelagert. Am vorderen Ende ist nur schematisch eine Werkzeughalterung 4 mit innerem Zuführungskanal 5 für das Kühlschmiermittel(K)-Luft(L)-Gemisch und dem vorderen Werkzeug 6 dargestellt. Das Werkzeug kann in an sich bekannter Weise manuell oder auch automatisch gewechselt werden. In der Figur 1 sind auf der rechten Seite die radialen Zuführungen für das Trägergas bzw. die Luft L und das Kühlschmiermittel K dargestellt. Über verschiedene radiale und axiale Kanäle werden Kühlschmiermittel K und Luft L über den Spannkolben 7 bei Trockenbearbeitung dem Spannbolzen 8a und bei Naßbearbeitung bzw. Vollschmierung dem Spannbolzen 8b zugeführt.

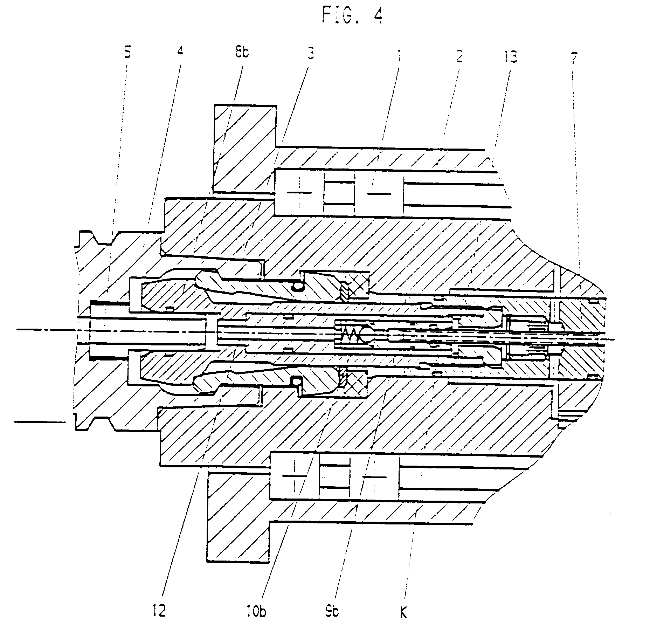

Für den Fall der Kreislaufführung des Kühlschmiermittels zur Kühlung der Lager und der Dichtungen ist in Figur 2 durch Pfeil sowohl eine Zu- als auch eine Abführung des Kühlschmiermittels K angedeutet. In Figur 2 sind außerdem Hydraulikanschlüsse H für automatisches Lösen und Spannen des Werkzeuges dargestellt.

In dem gegenüber Figur 1 vergrößerten Ausschnitt von Figur 3 ist die Anordnung eines Spannbolzen 8a für die Trockenbearbeitung in der Spindel 3 dargestellt, wobei der Spannbolzen 8a aus einer äußeren rohrartigen Hülse mit einem Außengewinde 13 zur Befestigung in der Spindel und einem zentralen Dosierelement 9a für das Kühlschmiermittel K, einem federbelasteten Rückschlagventil 10a und dem erfindungsgemäßen Kühlschmiermittelspeicherraum 11 aus porösem Sintermetall besteht.

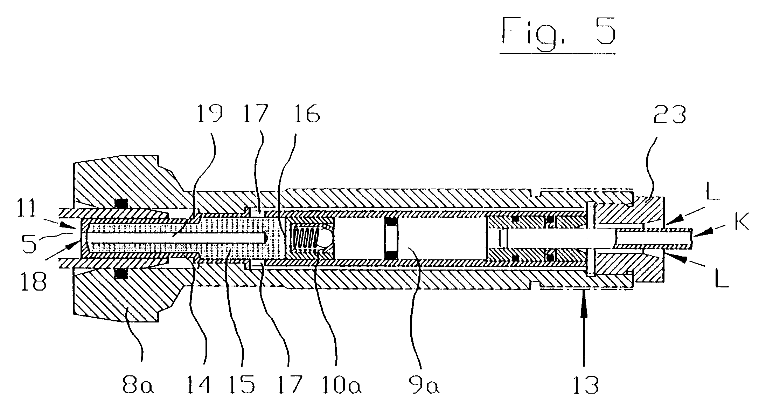

In Figur 4 ist die Anordnung eines Spannbolzens 8b für die nicht zur Erfindung gehörende Naßbearbeitung in der Spindel 3 dargestellt, wobei dieser Spannbolzen ein für die erhöhte Kühlschmiermittelzufuhr ausgelegtes Dosierelement 9b, federbelastetes Rückschlagventil 10b und ein Zuführungsrohr 12 besitzt.

In Figur 5 ist schließlich der Spannbolzen 8a für die Trockenbearbeitung genauer dargestellt. In dem Spannbolzen 8a ist im vorderen Bereich der mit porösem Sintermetall 15 gefüllte Kühlschmiermittelspeicherraum 11 mit dem zylindrischen Mantel 14 angeordnet. Der Kühlschmiermittelspeicherraum 11 besitzt eine Zuführungsöffnung 16 für das Kühlschmiermittel, eine Zuführungsöffnung 17 für die Luft und eine kleine zentrale Austrittsöffnung 18 für das Kühlschmiermittel-Luft-Gemisch. Innerhalb des Kühlschmiermittelspeicherraumes 11 befindet sich außerdem der zentrale Kanal 19. Zur Montage kann die innere Baueinheit aus Kühlschmiermittelspeicherraum 11 und Dosierelement 9a bei der Darstellung nach der Figur 5 von rechts in den Spannbolzen 8a eingeschoben werden und mit dem Abschlußstopfen 23 gehalten werden.

### Bezugszeichenliste

- (1): Spindellager
- (2): Spindelgehäuse
- (3): schnelldrehende, motorisch angetriebene Bearbeitungsspindel
- (4): Werkzeughalterung
- (5): Zuführungskanal für K und/oder L
- (6): Werkzeug
- (7): Spannkolben
- (8a): Spannbolzen für Trockenbearbeitung
- (8b): Spannbolzen für Naßbearbeitung
- (9a, 9b): Dosierelement für K
- (10a, 10b): federbelastetes Rückschlagventil
- (11): Kühlschmiermittelspeicherraum, mit porösem Sintermetall gefüllt
- (12): Zuführungsrohr für K
- (13): Außengewinde von (8a, 8b)
- (14): zylindrischer Mantel von (11)
- (15): poröses Sintermetall
- (16): Zuführungsöffnung für K
- (17): Zuführungsöffnung für L
- (18): Austrittsöffnung für K-L
- (19): Kanal
- (23): Abschlußstopfen
- H: Hydraulikanschlüsse für automatisches Lösen und Spannen des Werkzeuges
- K: Kühlschmiermittel
- L: Druckluft, Trägergas

## Patentansprüche

1. Verfahren zur Kühlung und Schmierung eines spanend arbeitenden, rotierenden Werkzeuges mit geometrisch definierter Schneide und gegebenenfalls des Werkstückes im Bearbeitungsbereich, wobei in einer Bearbeitungsspindel ein Kühlschmiermittel und ein Trägergas getrennt zugeführt und vermischt, und das Gemisch durch werkzeugintegrierte Zuführungskanäle auf die Schneide und gegebenenfalls in den Bearbeitungsbereich zugeführt wird, **dadurch gekennzeichnet**, daß Kühlschmiermittel und Trägergas in einem ganz oder teilweise mit porösem Füllmaterial gefüllten unmittelbar vor dem Werkzeug befindlichen Kühlschmiermittelspeicherraum miteinander vermischt werden, wobei dem im wesentlichen zylindrisch ausgebildeten Kühlschmiermittelspeicherraum an der einen Stirnseite das Kühlschmiermittel und radial von außen das Trägergas zugeführt wird und das erzeugte Gemisch über eine zentrale gegenüber dem Querschnitt des Kühlschmiermittelspeicherraumes kleinere Austrittsöffnung an der gegenüberliegenden zur Bearbeitungsseite gerichteten Stirnseite austritt, so daß auch bei abgeschalteter Kühlschmiermittelzufuhr das Trägergas für eine begrenzte Zeit mit dem im Füllmaterial gespeicherten Kühlschmiermittel benetzt wird.

2. Verfahren nach Anspruch 1, **dadurch gekennzeichnet**, daß die Zufuhr von Kühlschmiermittel und Trägergas in den Kühlschmiermittelspeicherraum jeweils getrennt gesteuert wird.

3. Verfahren nach Anspruch 1 oder 2, **dadurch gekennzeichnet**, daß die Zumessung des Kühlschmiermittels über innerhalb der sich drehenden Bearbeitungsspindel angeordnete Dosierelemente erfolgt.

4. Verfahren nach Anspruch 1 oder 3, **dadurch gekennzeichnet**, daß das Kühlschmiermittel und das Trägergas auf unterschiedlich langem Weg durch das Füllmaterial gedrückt werden.

5. Verfahren nach einem der Ansprüche 1 bis 4, **dadurch gekennzeichnet**, daß nach Abschalten der Zufuhr von Kühlschmiermittel und Trägergas das Füllmaterial im Kühlschmiermittelspeicherraum zumindest teilweise mit Kühlschmiermittel gefüllt bleibt.

6. Verfahren nach einem der Ansprüche 1 bis 5, **dadurch gekennzeichnet**, daß nach Abschalten und/oder vor Einschalten des Kühlschmiermittels für einen Zeitraum von bis zu 30 s, vorzugsweise bis zu 15 s, das Trägergas ausreichend mit Kühlschmiermittel aus dem Kühlschmiermittelspeicherraum benetzt wird.

7. Verfahren nach einem der Ansprüche 1 bis 6, **dadurch gekennzeichnet**, daß bei abgeschalteter Kühlschmiermittelzufuhr zum Kühlschmiermittelspeicherraum zur Kühlung und Schmierung der Lager und Dichtungen der Mediendurchführung das Kühlschmiermittel im Kreislauf geführt wird.

8. Verfahren nach Anspruch 7, **dadurch gekennzeichnet**, daß zur Kühlung der Mediendurchführung die Strömungsrichtung des Kühlschmiermittels umgekehrt wird.

9. Verfahren nach einem der vorhergehenden Ansprüche, **dadurch gekennzeichnet**, daß das Kühlschmiermittel aus einem Dosierelement diskontinuierlich und/oder getaktet direkt dem Kühlschmiermittelspeicherraum zugeführt wird.

10. Bearbeitungsspindel mit einem daran befestigten spanend arbeitenden, rotierenden Werkzeug und in der Bearbeitungsspindel angeordneten getrennten Zuführungen für Kühlschmiermittel und Trägergas und werkzeugintegrierten Kanälen zur Zuführung des Gemisches auf die Schneide und gegebenenfalls in den Bearbeitungsbereich zur Durchführung des Verfahrens nach einem der vorhergehenden Ansprüche, **dadurch gekennzeichnet**, daß unmittelbar vor dem Werkzeug ein ganz oder teilweise mit porösem Füllmaterial (15) gefüllter Kühlschmiermittelspeicherraum (11) aus einem im wesentlichen zylindrischen geschlossenen Mantel (14) mit einer koaxialen Zuführungsöffnung (16) für das Kühlschmiermittel an der einen Stirnseite, mit radialen in dem Mantel (14) angeordneten Zuführungsöffnungen (17) für das Trägergas und mit einer gegenüber dem Durchmesser des Mantels (14) kleineren Austrittsöffnung (18) für das Kühlschmiermittel-Trägergas-Gemisch in der der Zuführungsöffnung (16) für das Kühlschmiermittel gegenüberliegenden Stirnseite des Mantels (14) angeordnet ist.

11. Bearbeitungsspindel nach Anspruch 10, **dadurch gekennzeichnet**, daß das poröse Füllmaterial (15) im Inneren mittig einen Kanal (19) besitzt, der sich von der Austrittsöffnung (18) bis kurz vor die Zuführungsöffnung (16) erstreckt.

12. Bearbeitungsspindel nach Anspruch 10 oder 11, **dadurch gekennzeichnet**, daß der Kühlschmiermittelspeicherraum (11) aus porösem Sintermetall besteht.

13. Bearbeitungsspindel nach Anspruch 10, **dadurch gekennzeichnet**, daß Kühlschmiermittelspeicherraum (11) und ein Dosierelement (9a) eine Baueinheit bilden und in einem als Hohlwelle ausgebildeten Spannbolzen (8a) angeordnet sind.

14. Bearbeitungsspindel nach Anspruch 13, **dadurch gekennzeichnet**, daß zwischen Spannbolzen (8a) und Dosierelement (9a) in Längsrichtung Kanäle zur Zuführung von Trägergas (L) angeordnet sind.

15. Bearbeitungsspindel nach Anspruch 13 oder 14, **dadurch gekennzeichnet**, daß der für die Trockenbearbeitung vorgesehene Spannbolzen (8a) mit dem Kühlschmiermittelspeicherraum (11) gegen einen für die Vollschmierung vorgesehenen Spannbolzen (8b) austauschbar ausgebildet ist, wobei der für die Vollschmierung vorgesehene Spannbolzen (8b) statt des Kühlschmiermittelspeicherraum (11) ein zentrales Zuführungsrohr (12) besitzt.

## Claims

1. Process for cooling and lubricating a metal cutting rotating tool with a geometrically defined cutting edge and, if any, a workpiece in the cutting zone, where a cooling lubricant and a carrier gas are fed separately and mixed in a cutting spindle and where the mixture is fed through tool-integrated feeder ducts onto the cutting edge and, if required, into the cutting zone, **characterized in that** the cooling lubricant and carrier gas are mixed with each other in a cooling lubricant reservoir located immediately upstream of the tool and partly or wholly filled with a porous filling material, where the cooling lubricant is fed to the mainly cylindrically designed and built cooling lubricant reservoir at one front-end side and where the carrier gas is fed radially from outside, and where the generated mixture exits through a central outlet port at the opposite front-end side pointing to the cutting side, said outlet port being smaller as compared with the cross-section of the cooling lubricant reservoir, so that the carrier gas is wetted for a limited period of time with the cooling lubricant stored in the filling material even if the cooling lubricant supply is shut-off.

2. Process according to Claim 1, **characterized in that** the supply of cooling lubricant and carrier gas into the cooling lubricant reservoir each is controlled separately.

3. Process according to Claim 1 or 2, **characterized in that** the dosed admixture of the cooling lubricant is effected via dosage elements arranged within the rotating cutting spindle.

4. Process according to Claim 1 or 3, **characterized in that** the cooling lubricant and the carrier gas are pressed on a differently long way through the filling material.

5. Process according to any of Claim 1 to 4, **characterized in that** the filling material in the cooling lubricant reservoir remains at least partly filled with cooling lubricant after shutoff of the feed of cooling lubricant and carrier gas.

6. Process according to any of Claims 1 to 5, **characterized in that** the carrier gas is sufficiently wetted with cooling lubricant from the cooling lubricant reservoir for a period of up to 30 s, preferably for a period of up to 15 s, after shut-off and/or prior to turn-on of the cooling lubricant.

7. Process according to any of Claims 1 to 6, **characterized in that** the cooling lubricant is conducted in circulated mode when the cooling lubricant supply to the cooling lubricant reservoir for cooling and lubrication of bearings and gaskets of the media passage is shut-off.

8. Process according to Claim 7, **characterized in that** the direction of flow of the cooling lubricant is reversed for cooling of the media passage.

9. Process according to any of the preceding claims, **characterized in that** the cooling lubricant is fed discontinuously and/or in cycled mode from a dosage element directly to the cooling lubricant reservoir.

10. Cutting spindle with a cutting rotating tool affixed to it and with separate feeders for cooling lubricant and carrier gas located in the cutting spindle and with tool-integrated ducts for feed of the mixture onto the cutting edge and, if required, into the cutting zone for execution of the process according to any of the preceding claims, **characterized in that** directly upstream of the tool a cooling lubricant reservoir (11) wholly or partly filled with porous filling material (15) and consisting of an essentially cylindrically closed shell (14) with a coaxial feeder port (16) for the cooling lubricant at one front-end side, equipped with radial feeder ports (17) located in the shell (14) for the carrier gas and with an outlet port (18) being smaller in diameter than the shell (14) for the mixture of cooling lubricant and carrier gas is located in the front-end side of the shell (14) located opposite to the feeder port (16) for the cooling lubricant.

11. Cutting spindle according to Claim 10, **characterized in that** the porous filling material (15) in the interior is provided with a duct (19) which extends from the outlet port (18) to shortly upstream of the feeder port (16).

12. Cutting spindle according to Claim 10 or 11, **characterized in that** the cooling lubricant reservoir (11) consists of porous sinter metal.

13. Cutting spindle according to Claim 10, **characterized in that** the cooling lubricant reservoir (11) and a dosage element (9a) form one construction unit and are located in a clamp bolt (8a) designed and built as a hollow shaft.

14. Cutting spindle according to Claim 13, **characterized in that** ducts for the supply of carrier gas (L) are located in longitudinal direction between clamp bolt (8a) and dosage element (9a).

15. Cutting spindle according to Claim 13 or 14, **characterized in that** the clamp bolt (8a) provided for dry machining together with the cooling lubricant reservoir (11) is exchangeable for a clamp bolt (8b) provided for full lubrication mode, with said clamp bolt (8b) provided for full lubrication being equipped with a central feeder duct (12) instead of the cooling lubricant reservoir (11).

## Revendications

1. Procédé de refroidissement et de lubrification d'un outil rotatif pour usinage de métaux avec enlèvement de copeaux à arête courante à géométrie définie et éventuellement de la pièce à usiner dans la zone d'usinage, un lubrifiant de refroidissement et un gaz porteur étant amenés séparément dans une broche d'usinage et mélangés et ce mélange étant amené sur l'arête et, le cas échéant, dans la zone d'usinage via des canaux d'alimentation intégrés à l'outil, **caractérisé en ce que** le lubrifiant de refroidissement et le gaz porteur sont mélangés l'un à l'autre dans un compartiment de stockage du lubrifiant de refroidissement entièrement ou partiellement rempli de matériau de remplissage poreux et situé directement devant l'outil, le lubrifiant de refroidissement étant amené sur l'une des faces avant du compartiment du lubrifiant de refroidissement de forme largement cylindrique et le gaz porteur étant amené radialement de l'extérieur et le mélange ainsi généré sortant via un petit orifice de sortie central vis-à-vis de la section du compartiment de stockage du lubrifiant de réfrigération sur la face avant opposée à la face d'usinage de sorte que le gaz porteur est humecté pendant un temps limité par le lubrifiant de refroidissement stocké dans le matériau de remplissage même lorsque l'alimentation en lubrifiant de refroidissement est arrêtée.

2. Procédé selon revendication 1 **caractérisé en ce que** l'amenée de lubrifiant de refroidissement et celle de gaz porteur dans le compartiment de stockage du lubrifiant de refroidissement sont commandées séparément.

3. Procédé selon revendication 1 ou 2 **caractérisé en ce que** le dosage du lubrifiant de refroidissement est fait va les éléments de dosage aménagés à l'intérieur de la broche d'usinage rotative.

4. Procédé selon revendication 1 ou 3 **caractérisé en ce que** le lubrifiant de refroidissement et le gaz porteur sont pressés à travers le matériau de remplissage en prenant un chemin différemment long.

5. Procédé selon l'une des revendications 1 à 4 **caractérisé en ce qu'**après l'arrêt de l'amenée de lubrifiant de refroidissement et de gaz porteur, le matériau de remplissage du compartiment de stockage du lubrifiant de refroidissement reste rempli au moins partiellement de lubrifiant de refroidissement.

6. Procédé selon l'une des revendications 1 à 5 **caractérisé en ce qu'**après l'arrêt et/ou avant la mise en marche du lubrifiant de refroidissement, le gaz porteur est suffisamment humecté de lubrifiant de refroidissement provenant du compartiment de stockage du lubrifiant de refroidissement pour un laps de temps jusqu'à 30 secondes, de préférence jusqu'à 15 secondes.

7. Procédé selon l'une des revendications 1 à 6 **caractérisé en ce que** le lubrifiant de refroidissement est transporté dans le circuit lorsque l'amenée de lubrifiant de refroidissement vers le compartiment de stockage du lubrifiant de refroidissement pour le refroidissement et la lubrification des paliers et garnitures d'étanchéité du transport des fluides est hors service.

8. Procédé selon revendication 7 **caractérisé en ce que** le sens du flux du lubrifiant de refroidissement pour le refroidissement du transport des fluides est inversé.

9. Procédé selon l'une des revendications précédentes **caractérisé en ce que** le lubrifiant de refroidissement est amené dans le compartiment de stockage de lubrifiant de refroidissement à partir d'un élément de dosage en discontinu et/ou directement par séquence.

10. Broche d'usinage avec un outil d'usinage rotatif qui y est attaché et des conduites d'amenées situées dans la broche d'usinage et séparées pour le lubrifiant de refroidissement et le gaz porteur et des canaux intégrés à l'outil pour l'amenée du mélange sur l'arête et, le cas échéant, dans la zone d'usinage pour la mise en oeuvre du procédé selon une des précédentes revendications **caractérisée en ce qu**'immédiatement devant l'outil est aménagé un compartiment de stockage du lubrifiant de refroidissement (11) rempli entièrement ou partiellement de matériau de remplissage (15), ledit compartiment de stockage étant constitué par une chemise (14) essentiellement cylindrique et fermée avec un orifice d'alimentation coaxial (16) pour le lubrifiant de refroidissement (11) sur la face avant, avec des orifices d'ouverture (17) pour le gaz porteur situés radialement dans la chemise (14) et avec un orifice d'ouverture (18) plus petit que le diamètre de la chemise (14) pour le mélange lubrifiant de refroidissement et gaz porteur dans la face avant de la chemise (14) située vis-à-vis de l'orifice d'alimentation (16) pour le lubrifiant de refroidissement.

11. Broche d'usinage selon revendication 10 **caractérisée en ce que** le matériau de remplissage poreux (15) possède à l'intérieur un canal (19) situé au milieu et s'étendant de l'orifice de sortie (18) jusque presque devant l'ouverture d'alimentation (16).

12. Broche d'usinage selon revendication 10 ou 11 **caractérisée en ce que** le compartiment de stockage du lubrifiant de refroidissement (11) est constitué par un métal céramique poreux.

13. Broche d'usinage selon revendication 10 **caractérisée en ce que** le compartiment de stockage du lubrifiant de refroidissement (11) et un élément de dosage (9a) constituent une unité de construction et sont situés dans un boulon de tension (8a) sous forme d'arbre creux.

14. Broche d'usinage selon revendication 13 **caractérisée en ce que** des canaux pour l'alimentation du gaz porteur (L) sont aménagés entre le boulon de tension (8a) et l'élément de dosage (9a) dans le sens longitudinal.

15. Broche d'usinage selon revendication 13 ou 14 **caractérisée en ce que** le boulon de tension (8a) avec le compartiment de stockage du lubrifiant de refroidissement (11) prévu pour I'usinage à sec est d'une exécution telle qu'il est remplaçable par un boulon de tension (8b) prévu pour la lubrification hydrodynamique, le boulon de tension (8b) prévu pour la lubrification hydrodynamique possédant un tube d'alimentation central (12) au lieu du compartiment de stockage du lubrifiant de refroidissement (11).
